## Europäisches Patentamt

## European Patent Office

## Office européen des brevets

(19)

(11) Veröffentlichungsnummer: **0 069 231**

**A1**

(12) # EUROPÄISCHE PATENTANMELDUNG

(21) Anmeldenummer: **82104759.4**

(22) Anmeldetag: **29.05.82**

(51) Int. Cl.³: **B 60 D 1/06**

(30) Priorität: **03.07.81 DE 8119447 U**

(43) Veröffentlichungstag der Anmeldung:
**12.01.83 Patentblatt 83/2**

(84) Benannte Vertragsstaaten:
**FR NL SE**

(71) Anmelder: **Westfalia-Werke Franz Knöbel & Söhne KG
Am Sandberg 45
D-4840 Rheda-Wiedenbrück(DE)**

(72) Erfinder: **Hermbusch, Gerd, Ing.-grad.
Westfalen Strasse 24
D-4831 Langenberg(DE)**

(74) Vertreter: **Meldau, Gustav, Dipl.-Ing. et al,
Vennstrasse 9 Postfach 2452
D-4830 Gütersloh 1(DE)**

(54) **Halterung mit Anhängerkupplung für Kraftfahrzeuge.**

(57) Die Erfindung betrifft eine Halterung für Kupplungshaken mit Kugel für Kraftfahrzeuge mit Anhängerkupplung, bei der die Halterung aus einer Traverse besteht mit Endteilen zur Verbindung mit dem Traggestell des Kraftfahrzeuges. Bei diesem Kupplungshaken besteht die Traverse aus einem Mittelteil (3), an dem der Haken (17) festsitzt, sowie zwei Seitenteilen (1 und 2), an deren äußeren Enden die Endteile (5) in Gestalt von geformten Blechen etwa rechtwinklig befestigt sind, wobei die Seitenteile (1 und 2) teleskopartig mit dem Mittelteil (3) verbunden und mit lösbaren Mitteln befestigt sind.

Fig. 1

EP 0 069 231 A1

**Patentanwalt**

Dipl.-Ing. Gustav Meldau
Dipl.-Phys. Dr. H.-J. Strauß

— 1 —

**0069231**

4830 Gütersloh 1, Vennstr. 9, Postfach 2540
Telefon: (0 52 41) · 1 30 54

Datum

W 1510 gM/bu

Unser Zeichen

Firma
Westfalia-Werke
Franz Knöbel & Söhne KG

Am Sandberg 45

4840 Rheda-Wiedenbrück

---

### Halterung mit Anhängerkupplung für Kraftfahrzeuge

---

Die Erfindung bezieht sich auf eine Halterung für Kupplungshaken mit Kugel für Kraftfahrzeuge mit Anhängerkupplung, bei der die Halterung aus einer Traverse besteht mit Endteilen zur Verbindung mit dem Traggestell des Kraftfahrzeuges.

Bei vielen Kraftfahrzeugen sind in der sogenannten "Rahmen-Boden-Anlage" an jeder Seite Längsträger vorgesehen, an deren Enden im allgemeinen die hinteren Stoßfänger befestigt sind. Diese Längsträger werden ebenfalls für die Befestigung von Anhängerkupplungen verwendet. Dadurch wird es erforderlich, daß zwischen diesen beiden seitlich im Fahrzeugboden liegenden Trägern eine Quertraverse angeordnet wird, die in der Mitte den eigentlichen Kupplungshaken

- 2 -

mit Kupplungskugel trägt. Die Anordnung ist derart getroffen, daß die Quertraverse unmittelbar hinter oder auch innerhalb der Profile der Stoßfänger verläuft. Der Kupplungshaken der Anhängerkupplung ist dann derart nach unten und hinten abgebogen, daß er das Profil der Stoßfänger umgreift, so daß die Kupplungskugel hinter den Stoßfängern oder etwas unterhalb liegt.

Diese Ausführung bedingt eine Quertraverse, die verhältnismäßig lang ist, weil sie sich über einen großen Teil der Breite des Fahrzeuges zu erstrecken hat. Eine derart lange Quertraverse, an deren Enden noch weitere Teile befestigt sind und in deren Mitte der Kupplungshaken festsitzt und hervorragt, ist in der Fertigung schwierig zu handhaben und insbesondere in der Lagerhalterung und dem Versand nur von Hand zu bewegen und zu verstauen; eine Verpackung ist nicht möglich.

Weiterhin sind bei derartigen Quertraversen die Profile derart auszubilden, daß sie einerseits die erheblichen Belastungen in den verschiedenen Richtungen aufnehmen können, andererseits jedoch nicht zu schwer werden und materialsparend hergestellt sind. Dadurch ergibt sich vielfach die Forderung, das Profil unterschiedlich zu formen, und es entstehen dadurch auch Profilhohlräume, die schwierig oder gar nicht erreichbar sind, so daß ein Oberflächenschutz innerhalb dieser Profilhohlräume, beispielsweise durch Tauchlackierung, gar nicht oder nur unter Schwierigkeiten durchzuführen ist, im letzteren Fall entspricht der Oberflächenschutz im allgemeinen nicht der üblicherweise geforderten Qualität.

Hier setzt der Gedanke der Erfindung ein, nach der eine Halterung für Kupplungshaken der gattungsgemäßen Art dadurch gekennzeichnet ist, daß die Traverse aus einem Mittelteil, an dem der Haken festsitzt, sowie zwei Seitenteilen besteht, an deren äußeren Enden die Endteile in Gestalt von geformten Blechen etwa rechtwinklig befestigt sind, wobei die Seitenteile teleskopartig mit dem Mittelteil verbunden und mit lösbaren Mitteln befestigt sind.

Das Mittelteil kann aus zwei U-Profilen bestehen, die, mit ihren Öffnungen gegeneinanderstehend, mittels des Hakenschaftes fest miteinander verbunden sind. Die U-Profile sind zweckmäßig derart angeordnet, daß ihre Längskanten einen Zwischenraum freilassen.

Die Seitenteile sind vorzugsweise als Rohrprofile ausgebildet und weisen eine Querschnittsform auf, die ein Ein- bzw. Überschieben auf die Enden des Mittelteils zuläßt. In den einander übergreifenden Abschnitten von Mittel- und Seitenteilen sind mindestens je zwei Schraubenlöcher angeordnet. Diese Schraubenlöcher liegen vorteilhaft weit außen im Profil und sind den dazu parallelen Profilwandungen unmittelbar benachbart. Zweckmäßig sind jeweils zwei Schraubenlöcher in den übergreifenden Abschnitten gegeneinander versetzt angeordnet.

Eine Halterung für Kupplungshaken nach der Erfindung besteht aus drei voneinander lösbaren Teilen etwa gleicher Länge, so daß die Quertraverse gewissermaßen dreiteilig ausgebildet ist. Diese Ausbildung der Halterung erlaubt es, die drei Teile bei der Lagerung und beim Versand kompakt in einer Verpackung unterzubringen, beispielsweise in einem Einheitskarton. Dadurch besteht die Möglichkeit, diese Halterung in den üblichen, vorhandenen Regalen zu lagern, und zwar auch in Hochregalen. Im Versand gilt eine derartige Halterung nicht als Sperrgut und kann ebenfalls, beispielsweise auf Paletten gestapelt, mit Maschinen, beispielsweise Gabelstaplern bewegt werden. Für die Fertigung ergibt sich der Vorteil, daß drei Teile geringerer Abmessungen während der einzelnen Fertigungsgänge zu handhaben sind, so daß sich die Fertigung dadurch vereinfachen läßt und geringeren Raum und weniger Zeit beansprucht. Auch für die Fertigung verwendete Haltevorrichtungen u. dgl. haben einen geringeren Umfang und sind daher kostengünstiger. Ein

- 4 -

weiterer Vorteil ergibt sich dadurch, daß Mittelteil und Seitenteile unabhängig voneinander geändert oder anders ausgestaltet sein
können, den jeweiligen Anforderungen verschiedener Fahrzeugtypen
entsprechend oder auch wesentlich einfacher einer Änderung des
bisherigen Fahrzeugtyps anzupassen sind.

Wenn beispielsweise die Stoßfänger in ihrer Form geändert werden,
ist lediglich am Mittelteil die Form des Kupplungshakens anzupassen, während die beiden Seitenteile nach wie vor die gleiche Form
behalten. Wenn am Fahrzeug die Rahmen-Boden-Anlage andere Anbringungspunkte hat, ist es lediglich erforderlich an den beiden Seitenteilen eine Anpassung vorzunehmen, wobei das Mittelteil unbeeinflußt und gleich bleibt.

Durch die Ausbildung der beiden Seitenteile als mindestens an einem
Ende offene Rohrprofile und die Ausbildung des Mittelteils über die
gesamte Länge mit zwei offenen Schlitzen, ist ein Oberflächenschutz
hoher Qualität leicht und einfach durchzuführen. Aufgrund der teleskopartigen Verbindung der Seitenteile mit dem Mittelteil ist
eine zusätzliche Verstärkung und Versteifung der Quertraverse erreicht an den Stellen, an denen sie besonders empfindlich gegen Belastung ist.

Die Erfindung wird nachstehend anhand eines Ausführungsbeispiels mit
Bezug auf die Zeichnungen näher erläutert. In den Zeichnungen zeigen:

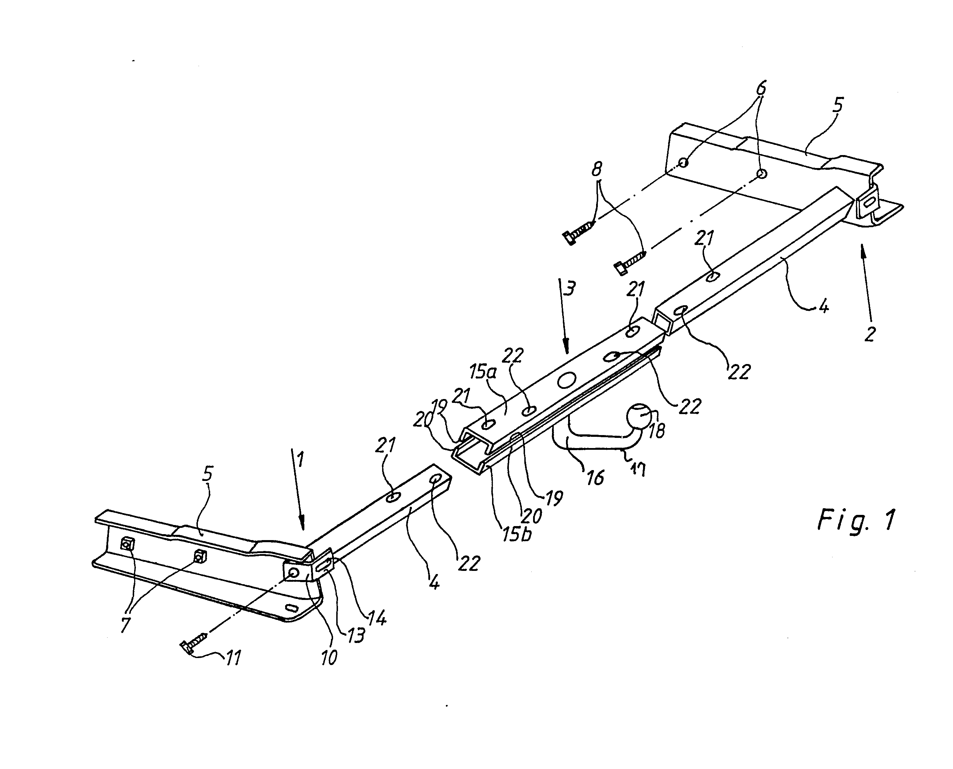

Fig. 1    eine perspektivische Ansicht in teilweise auseinander-
          genommenem Zustand,
Fig. 2    eine Seitenansicht, teilweise geschnitten.

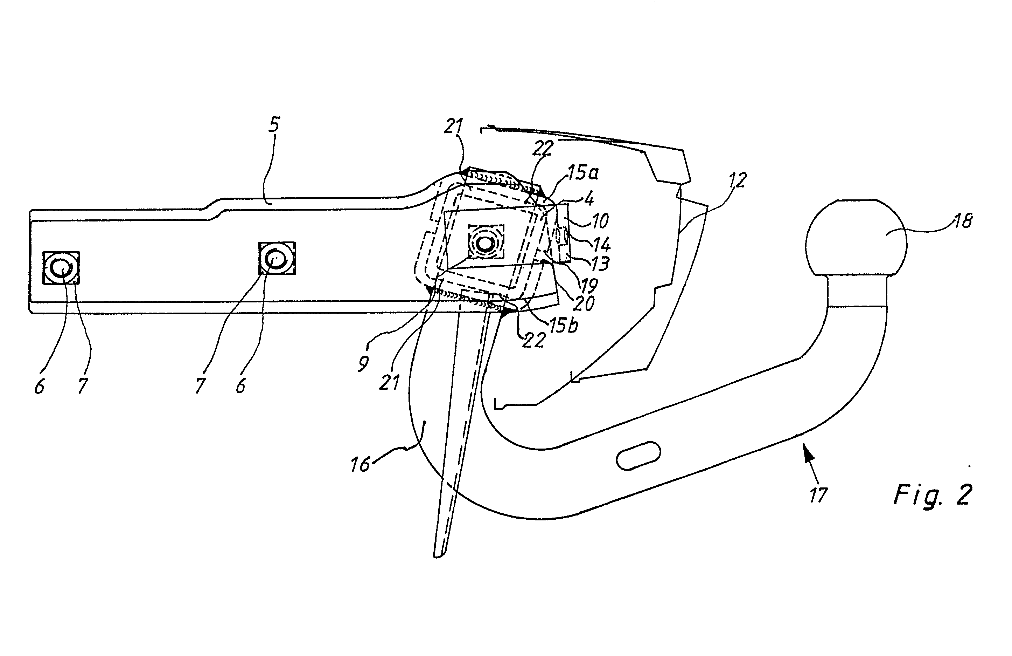

Die beiden Seitenteile 1 und 2 bestehen je aus einem Rohr 4 mit
quadratischem Querschnitt, das einen Teil der Quertraverse bildet.
An dem äußeren Ende eines jeden Rohres 4 ist jeweils ein Endteil 5,
beispielsweise durch Schweißen befestigt. Diese Endteile 5 bestehen aus geformten Blechen und dienen zur Verbindung mit der
Rahmen-Boden-Anlage des Fahrzeugs. Sie sind daher in ihrer Form
den entsprechenden Gegenformen des Fahrzeuges angepaßt. Die Endteile 5 sind mit Schraubenlöchern 6 versehen, an denen auch
Schweißmuttern 7 angebracht sind zur festen Verbindung mittels der
Schrauben 8 mit dem Fahrzeug. Die Rohre 4 der Seitenteile sind,
wie insbesondere aus Fig. 2 zu erkennen ist, mit ihren Profilachsen etwas geneigt gegenüber den Endteilen 5 mit diesen fest verbunden, und im Zentrum ist eine weitere Schweißmutter 9 angeordnet zur Befestigung eines Haltewinkels 1o mittels einer Schraube
11. Dieser Haltewinkel 1o dient zur unmittelbaren Verbindung mit
der Halterung des Stoßfängers 12, der hier im Profil angedeutet
ist. Dazu ist auf dem nach innen abgebogenen Schenkel 13 ein Langloch 14 an diesem Haltewinkel angeordnet.

Das Mittelteil 3 besteht aus zwei mit ihren Öffnungen gegeneinanderstehenden U-Profilen 15a und 15b. Diese U-Profile sind als abgekantete Blechteile sehr leicht und einfach herstellbar. Die beiden U-Profile 15a und 15b sind fest miteinander verbunden durch
den hinteren Schaft 16 des Kupplungshakens 17, an dessen anderem
Ende die Kupplungskugel 18 befestigt ist. Der Schaft 16 ist aus
der Senkrechten etwas schräg nach hinten geneigt, so daß er das
Profil des Stoßfängers 12 umgreift und die aus dem Mittelteil 3
und den beiden Endteilen 1 und 2 gebildete Quertraverse innerhalb
dieses Profils der Stoßfänger 12 liegen kann. Der Schaftteil 16
des Kupplungshakens ist durch entsprechende Löcher in den beiden
U-Profilen 15a und 15b durchgeführt und fest damit verschweißt.
Dabei ist die Anordnung so getroffen, daß zwischen den beiden
Längskanten 19 und 2O der mit ihren Öffnungen gegeneinander liegenden U-Profile 15a und 15b ein Zwischenraum freigelassen ist.

Die beiden U-Profile 15a und 15b des Mittelteils 3 umgeben einen
freien Raum, der in seiner Form und seinen Abmessungen der Außenform und den Außenabmessungen der Rohre der Seitenteile 4 entspricht. Diese Rohre der Seitenteile werden von beiden Seiten
her in den Mittelteil teleskopartig eingeführt. Eine Verbindung
wird mittels Schrauben hergestellt. Die dafür erforderlichen
Schraubenlöcher 21 und 22, die in den ineinandergesteckten Teilen
miteinander fluchten, sind derart angeordnet, daß sie unmittelbar
benachbart zu den dazu parallelen Außenflächen der Profile liegen.
Dadurch wird einerseits eine wesentlich höhere Festigkeit der Verbindungen erreicht, andererseits ist es nicht erforderlich die
Schraubenschäfte mit zusätzlichen Distanzrohren zu versehen, und
die Schrauben sind dadurch auch wesentlich geringer belastet.

**Patentanwalt**

Dipl.-Ing. Gustav Meldau
Dipl.-Phys. Dr. H.-J. Strauß

4830 Gütersloh 1, Vennstr. 9. Postfach 2540
Telefon: (0 52 41) · 1 30 54

Datum

Unser Zeichen

W 1510 gM/bu

**0069231**

## Patentansprüche

1. Halterung für Kupplungshaken mit Kugel für Kraftfahrzeuge mit Anhängerkupplung, bei der die Halterung aus einer Traverse besteht mit Endteilen zur Verbindung mit dem Traggestell des Kraftfahrzeuges, dadurch gekennzeichnet, daß die Traverse aus einem Mittelteil (3), an dem der Haken (17) festsitzt, sowie zwei Seitenteilen (1 und 2) besteht, an deren äußeren Enden die Endteile (5) in Gestalt von geformten Blechen etwa rechtwinklig befestigt sind, wobei die Seitenteile (1 und 2) teleskopartig mit dem Mittelteil (3) verbunden und mit lösbaren Mitteln befestigt sind.

2. Halterung nach Anspruch 1, dadurch gekennzeichnet, daß das Mittelteil (3) aus zwei U-Profilen (15a und 15b) besteht, die, mit ihren Öffnungen gegeneinanderstehend, mittels des Hakenschaftes (16) fest miteinander verbunden sind.

3. Halterung nach Anspruch 2, dadurch gekennzeichnet, daß die U-Profile (15a und 15b) derart angeordnet sind, daß ihre Längskanten (19 und 20) einen Zwischenraum freilassen.

4. Halterung nach Anspruch 1 und einem der vorstehenden Ansprüche, dadurch gekennzeichnet, daß die Seitenteile (1 und 2) als Rohrprofile ausgebildet, eine Querschnittsform aufweisen, die ein Ein- bzw. Überschieben auf die Enden des Mittelteils (3) zuläßt.

5. Halterung nach Anspruch 1 und einem der vorstehenden Ansprüche, dadurch gekennzeichnet, daß in den einander übergreifenden Abschnitten von Mittelteil (3) und Seitenteilen (1 und 2) mindestens je zwei Schraubenlöcher (21 und 22) angeordnet sind.

6. Halterung nach Anspruch 5, dadurch gekennzeichnet, daß die Schraubenlöcher (21 und 22) weit außen im Profil liegen und den dazu parallelen Profilwandungen unmittelbar benachbart sind.

7. Halterung nach Anspruch 5, dadurch gekennzeichnet, daß jeweils zwei Schraubenlöcher (21 und 22) in den übergreifenden Abschnitten gegeneinander versetzt sind.

0069231

*Fig. 1*

Fig. 2

# EUROPÄISCHER RECHERCHENBERICHT

Europäisches Patentamt

## EINSCHLÄGIGE DOKUMENTE

| Kategorie | Kennzeichnung des Dokuments mit Angabe soweit erforderlich, der maßgeblichen Teile | Betrifft Anspruch | KLASSIFIKATION DER ANMELDUNG (Int. Cl ³) |
|---|---|---|---|
| Y | DE-A-1 780 189 (FA. OTTO RIEHLE) <br> * Insgesamt * <br><br> --- | 1-7 | B 60 D 1/06 |
| Y | US-A-3 768 837 (R.P. REESE) <br> * Spalte 2, Zeile 58 - Spalte 3, Zeile 60; Figur 1 * <br><br> --- | 1-7 | |
| A | US-A-4 032 170 (L.A. WOOD) <br> * Spalte 3, Zeilen 3-47; Figuren 1,2 * <br><br> --- | 1 | |
| A | US-A-4 275 899 (V.L. HUMPHREY) <br><br> --- | | |
| A | US-A-3 547 470 (W.R. PARKHURST) <br><br> --- | | RECHERCHIERTE SACHGEBIETE (Int. Cl. ³) |
| A | US-A-3 113 789 (T.W. SAFFORD) <br><br> ----- | | B 60 D 1 |

Der vorliegende Recherchenbericht wurde für alle Patentansprüche erstellt.

| Recherchenort | Abschlußdatum der Recherche | Prüfer |
|---|---|---|
| DEN HAAG | 17-09-1982 | CINQUANTINI B. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82